Europäisches Patentamt

European Patent Office

Office européen des brevets

(11) Numéro de publication: **0 271 436 B1**

## (12) FASCICULE DE BREVET EUROPEEN

(45) Date de publication de fascicule du brevet:
18.09.91

(51) Int. Cl.⁵: **G01D 5/24**

(21) Numéro de dépôt: **87810569.1**

(22) Date de dépôt: **05.10.87**

(54) **Capteur capacitif pour la mesure d'un déplacement.**

(30) Priorité: **13.11.86 CH 4535/86**

(73) Titulaire: **Meyer, Hans Ulrich**
**42, rue de Lausanne**
**CH-1110 Morges(CH)**

(72) Inventeur: **Meyer, Hans Ulrich**
**42, rue de Lausanne**
**CH-1110 Morges(CH)**

(74) Mandataire: **Ardin, Pierre**
**PIERRE ARDIN & CIE 22, rue du Mont-Blanc**
**CH-1201 Genève(CH)**

(43) Date de publication de la demande:
**15.06.88 Bulletin  88/24**

(45) Mention de la délivrance du brevet:
**18.09.91 Bulletin  91/38**

(84) Etats contractants désignés:
**DE FR GB**

(56) Documents cités:
**EP-A- 0 053 091**
**GB-A- 2 009 944**
**US-A- 4 429 307**

## Description

L'invention concerne un capteur capacitif pour la mesure d'un déplacement, comprenant une règle comportant une série d'électrodes réceptrices ayant entre elles un pas T dans le sens du déplacement et un curseur situé face à la règle et comportant une série d'électrodes émettrices ayant entre elles un pas T/N dans le sens du déplacement.

Le brevet suisse N° 539 837 décrit un dispositif électronique dans lequel une configuration périodique de signaux électriques sur les électrodes émettrices ne peut être modifiée que par incréments égaux au pas T/N d'une électrode émettrice dans le sens du déplacement, puis l'amplitude des signaux est ajustée jusqu'à ce que le signal couplé soit nul sur les électrodes de la règle. La position est donnée par la somme des incréments et de la valeur d'interpolation.

L'amplitude du signal de commande donnant le degré d'interpolation, donc la position, un convertisseur numérique-analogique est nécessaire.

Dans un autre dispositif connu (GB 2 009 944) deux solutions distinctes sont proposées afin de permettre une détermination de la position plus fine que le pas T/N des électrodes du curseur. La première solution préconise des signaux sinusoïdaux en combinaison avec des électrodes réceptrices de forme sinusoïdale, difficiles à réaliser; de plus, il n'est pas tenu compte des effets de bords. La deuxième solution préconise des signaux rectangulaires, la relation linéaire entre la phase et la position étant obtenue par la phase d'un signal commandant une "fenêtre de détection" intégrant le signal capté sur un temps donné et dont la sortie est gardée à zéro par un asservissement en phase.

Les dispositifs cités ci-dessus, de même que plusieurs autres dispositifs connus, ont leur plus petit incrément purement digital limité à l'ordre de grandeur T/N du pas d'une électrode du curseur et nécessitent donc des moyens électroniques analogiques d'interpolation d'autant plus performants que le rapport entre le pas d'une électrode du curseur et la résolution à atteindre est élevé. Le but de la présente invention est d'augmenter la précision de la mesure de façon relativement simple. A cet effet, le capteur dont le curseur comporte une série d'électrodes électriquement divisée en M groupes de N électrodes voisines est caractérisé en ce que des moyens électroniques permettant de générer sur chaque groupe l'une des deux répartitions de signaux, spatialement périodiques et mutuellement décalées, un circuit de commande étant prévu pour modifier la configuration de signaux sur les électrodes émettrices par commutation des groupes de l'une des répartition de signaux à l'autre.

L'avantage de ces mesures est de permettre un incrément digital bien inférieur au pas T/N d'une électrode émettrice, permettant ainsi d'éviter, dans la plupart des cas, la nécessité d'une interpolation analogique.

En effet, les moyens électroniques décrits permettent une commutation séparée de chaque groupe de N électrodes émettrices au lieu de commuter l'ensemble des électrodes émettrices, comme décrit dans l'état de la technique.

Si l'on a M groupes de N électrodes émettrices, le déplacement d'un groupe d'un pas T/N, correspondant à une électrode, dans le sens de la mesure, donne un déplacement équivalent moyen de

$$\frac{T}{M.N}$$

de l'ensemble des électrodes, en admettant que N soit suffisamment élevé (8 ou plus) pour que le degré de variation des capacités de mesure soit constant sur un parcours de T/N et que les capacités de mesure soient les mêmes pour les M groupes d'électrodes émettrices.

Si ce dernier critère n'est pas satisfait, une répartition judicieuse des signaux de commande aux différents groupes permet de pallier au problème. C'est accessoirement pourquoi le décalage des configurations entre groupes doit rester minimal, pour minimiser l'influence de perturbations locales.

Les figures annexées montrent des formes d'exécutions et des diagrammes explicatifs du capteur faisant l'objet de l'invention :

La figure 1 montre un schéma de principe d'un capteur selon l'invention.

La figure 2 montre une table de vérité des sorties d'un générateur de signaux.

La figure 3 montre le schéma détaillé d'un groupe de communation.

La figure 4 montre des configurations de signaux sur les électrodes émettrices.

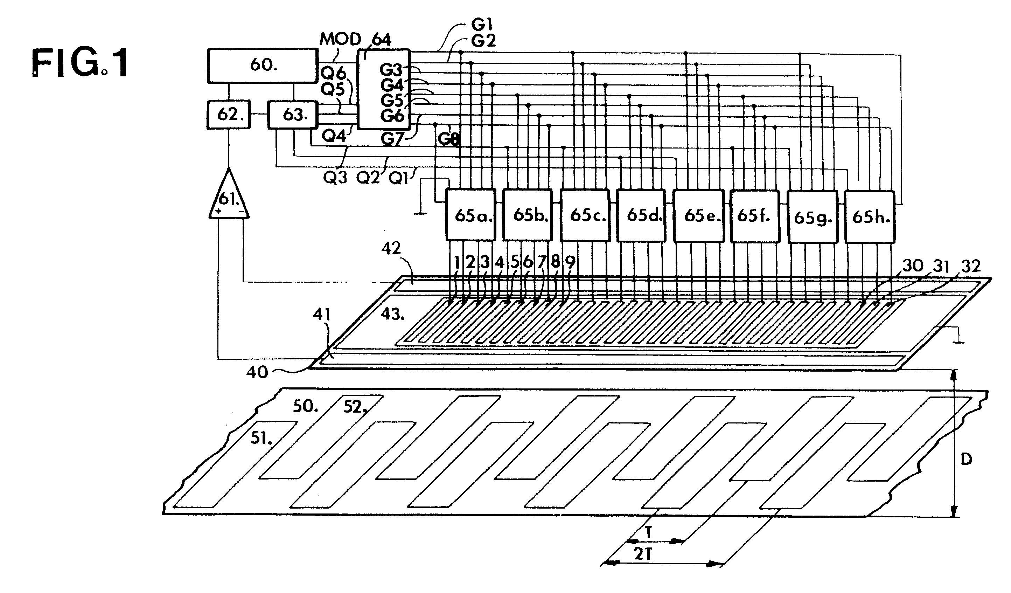

Un schéma de principe d'un capteur selon l'invention est montré à la figure 1. Une partie électronique, décrite plus bas, génère un signal sur chaque électrode émettrice 1 à 32 d'un curseur 40. Face au curseur 40 se trouve un règle 50. La distance D entre règle et curseur est exagérée pour améliorer la clarté du dessin. Sur la règle se trouvent des électrodes réceptrices impaires 51 et paires 52 recevant le signal des électrodes émettrices située vis-à-vis. Deux électrodes collectrices 41 et 42 captent respectivement le signal des électrodes réceptrices impaires 51 et paires 52.

Le champ généré par les électrodes émettrices est approximativement périodique dans la direction de mesure, la période moyenne étant d'environ 2 T. Un exemple de configuration possible du champ sera donné plus bas.

Les signaux captés sur les électrodes impaires seront donc approximativement en opposition de phase avec les signaux captés sur les électrodes paires. Une électrode de blindage 43 évite un couplage direct entre électrodes émettrices et collectrices. Les électrodes collectrices 41, 42 sont reliées aux entrées "+" et "-" d'un comparateur différentiel 61 influence une logique de correction 62 agissant sur un compteur binaire 63. Un générateur de signaux 64 est commandé par les sorties de poids élevé Q6, Q5, Q4 du compteur 63. Une base de temps 60 assure la synchronisation de tous les signaux. Les sorties G1 à G8 du générateur de signaux 64 sont connectées par les groupes de commutation 65a - 65h aux électrodes émettrices 1 - 32. Chaque groupe de commutation 65 est connecté à 4 électrodes émettrices voisines, on a donc ici N = 4. En pratique, il est avantageux de choisir N plus élevé, de l'ordre de 8 ou davantage, afin d'éviter les non-linéarités d'interpolation mentionnées plus haut.

Le générateur de signaux 64 a 2N sorties G1 - G8, ce qui est logique, puisque l'exemple décrit a un arrangement différentiel d'électrodes réceptrices, d'où la nécessité de fournir une configuration de signaux d'une période spatiale d'environ 2 T, c'est-à-dire correspondant à 2 N électrodes.

Chaque groupe de commutation relie les électrodes émettrices au générateur directement ou en introduisant un décalage dans la direction de la mesure. A cet effet, chaque groupe de commutation est commandé par une des sorties de faible poids Q3, Q2, Q1 du compteur binaire 63. La sortie Q3 (poids égal à 4) est reliée à 4 groupes de commutation 65b, c, f, g; la sortie Q2 (poids égale à 2) est reliée à 2 groupes de commutation 65d, e; la sortie Q1 (poids égal à 1) est reliée à un groupe de commutation 65h. Enfin, le groupe de commutation restant 65a a son entrée de contrôle reliée à la masse. On voit que le nombre de groupes de commutation 65 provoquant un décalage de la répartition des signaux correspond à l'état binaire des trois sorties de poids faible Q3, Q2, Q1 du compteur 63. La séquence de connection des groupes 65a - h est choisie de manière à minimiser l'influence sur la mesure d'erreurs de géométrie, par exemple un manque de parallélisme entre régle et curseur.

On a donc obtenu, par une interpolation purement digitale, un pas de mesure M fois plus fin que celui qui serait possible si les électrodes étaient reliées, par groupes périodiques de 2 N, directement au générateur 64.

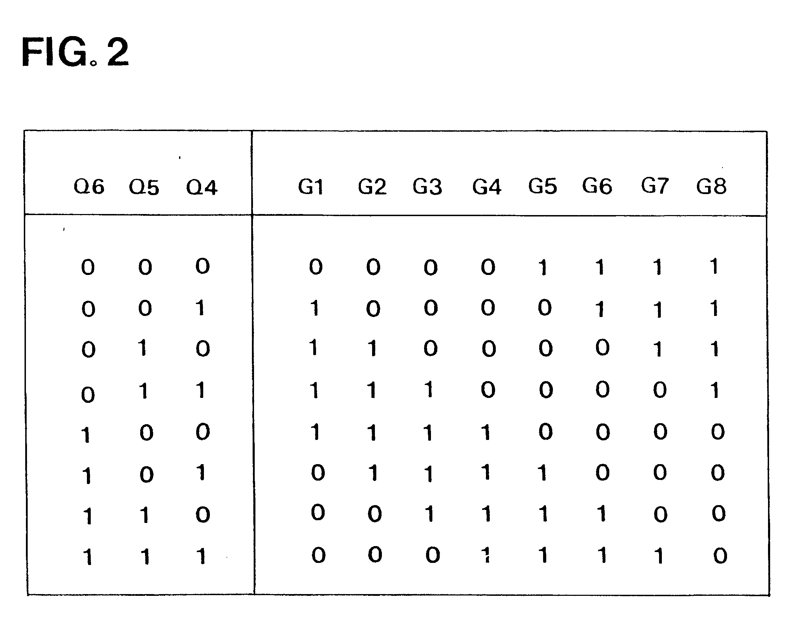

La figure 2 montre comme exemple la table de vérité des états logiques des sorties G1 à G8 d'un générateur de signaux en fonction des entrées Q6, Q5, Q4 venant du compteur binaire; l'entrée de modulation MOD (fig. 1) servant à moduler les sorties du décodeur est supposée à l'état "zéro"; à l'état "un" les sorties G1 à G8 seraient inversées.

Si les sorties G1 à G8 du générateur de signaux 64 étaient directement connectées aux électrodes émettrices 1 à 32 on obtiendrait une répartition spatiale périodique de signaux modulés sur ces électrodes 1 à 32, et le passage d'un état des sorties du générateur au suivant décalerait cette répartition spatiale d'un incrément égal à T/N, soit le pas d'une électrode émettrice en direction de mesure.

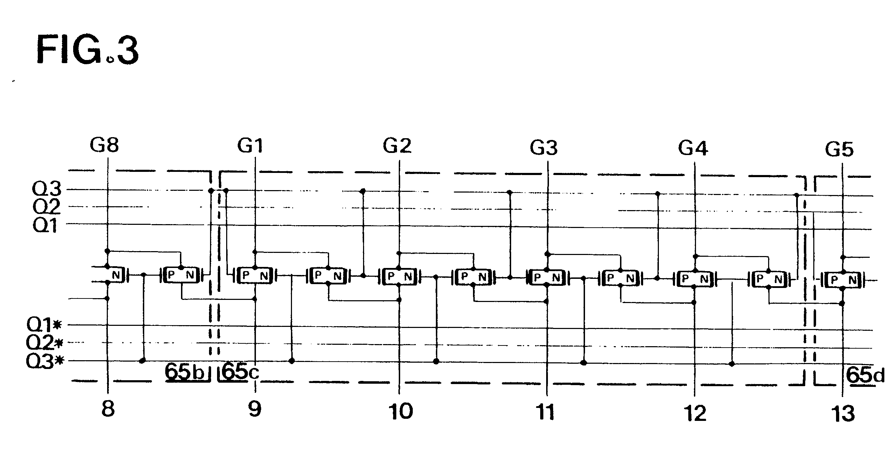

La figure 3 montre un exemple de réalisation, en technologie CMOS, d'un groupe de commutation, 65c, et de son interconnection avec N signaux G1 à G4 du générateur de signaux 64, avec un groupe d'électrodes 9 - 12, avec les groupes de commutations voisins 65b, 65d, et avec les signaux de commande Q3, Q2, Q1 et leurs compléments Q3*, Q2*, Q1*. Les transistors à effet de champ du type N conduisent lorsqu'ils sont commandés par un état logique "1", ceux du type P conduisent lorsqu'ils sont commandés par un état logique "0". Une analyse du circuit permet de voir que si, pour le groupe de commutation 65c, la sortie Q3 est à l'état logique 1, le groupe de commutation décale les signaux d'un incrément.

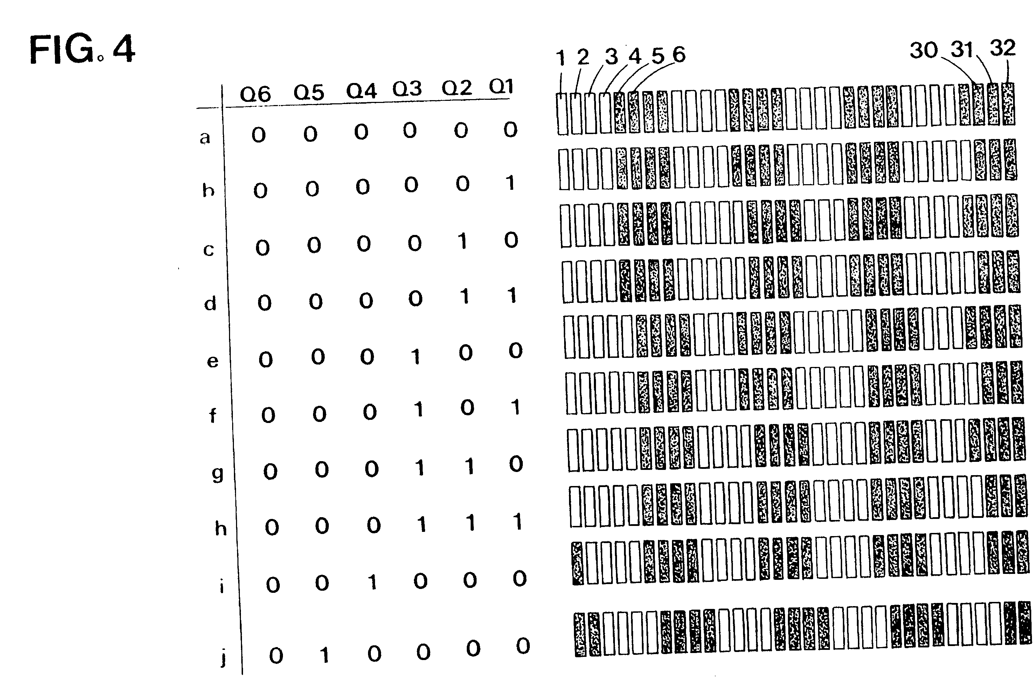

La figure 4 montre quelques configurations de signaux sur les électrodes émettrices en fonction de l'état des sorties Q6 à Q1 du compteur binaire 63.

La série des électrodes émettrices est représentée schématiquement avec la répartition de deux signaux modulés en opposition de phase. Les électrodes 1 - 32 comportant un signal sont laissées en blanc, celles comportant l'autre signal sont en noir, afin de donner une image du déplacement par incrément de la configuration de signaux en fonction des états des scrties Q6 à Q1 du compteur 63.

On voit qu'entre deux états consécutifs, la configuration moyenne est décalée, et qu'il faut M = 8 incréments du compteur pour retrouver la configuration originale décalée d'une électrodes, donc de T/N dans la direction de mesure, donnant ainsi un incrément digital de

$$\frac{T}{M.N} \cdot$$

Il est évident que la séquence de sélection des groupes de commutation peut être différente de celle représentée dans la figure 4, dérivée des connections des groupes de commutation 65a à 65h aux sorties Q3, Q2, Q1 du compteur 63. On pourrait par exemple décoder les sorties binaires Q3, Q2, Q1 pour chaque groupe de commutation, ce que permettrait un choix de séquences possibles plus grand.

L'électronique de commande, en particulier la logique de correction 62, peut être implémentée pour différentes méthodes d'acquisition du signal. Par exemple l'état de sortie du comparateur, compte tenu de la phase de modulation, peut servir à corriger l'état du compteur 63 vers le haut ou vers le bas; dans ce cas le compteur 63 est un compteur-décompteur, et l'état autour duquel le compteur 63 se stabilisera donnera la mesure du déplacement. On aura donc un asservissement électronique, la configuration de signaux sur les électrodes émettrices 1 - 32 "suivant" le déplacement des électrodes réceptrices 51, 52 de la règle.

Un objectif de l'invention étant de réduire la partie analogique de l'électronique, l'absence de moyens de filtrage peut entraîner une sortie digitale aléatoire du comparateur autour du point d'équilibre. En fonction de la résolution désirée du signal, il est néanmoins possible de filtrer digitalement la succession des états de sortie du compteur 63, par exemple en faisant la moyenne de plusieurs états successifs.

On peut également modifier l'état du compteur 63 par deux entrées de comptage/décomptage, l'une fine, l'autre grossière, afin de mieux suivre des déplacements rapides.

Enfin, il est également possible de générer une configuration de signaux se déplaçant sans cesse dans la direction de mesure, en incrémentant le compteur 63 à fréquence constante; le signal du comparateur 61 est alors démodulé et la varation de phase de ce signal démodulé est alors proportionnelle au déplacement.

La description de capteur selon l'invention a été faite pour une mesure linéaire de déplacement; il est clair que le même principe peut être appliqué à un capteur relatif plan ou cylindrique équivalent. Il est également clair que les définitions "curseur" et "règle" ont été utilisées pour leur clarté, mais que le fait d'échanger les fonctions "curseur" et "règle" ne change rien au principe de l'invention.

## Revendications

1. Capteur capacitif pour la mesure d'un déplacement comprenant deux pièces mobiles l'une par rapport à l'autre, la première constituant une règle (50) comportant une série d'électrodes réceptrices (51, 52) ayant entre elles un pas T dans le sens du déplacement, la seconde constituant un curseur (40) situé face à la règle et comportant une série d'électrodes émettrices (1 à 32) ayant entre elles un pas T/N dans le sens du déplacement et électriquement divisée en M groupes de N électrodes voisines, **caractérisé** en ce que des moyens électroniques (60 à 65) permettent de générer sur chaque groupe l'une de deux répartitions de signaux, spatialement périodiques et mutuellement décalées, un circuit de commande étant prévu pour modifier la configuration de signaux sur les électrodes émettrices par commutation des groupes d'une répartition de signaux à l'autre.

2. Capteur selon la revendication 1, **caractérisé** en ce que la modification de la configuration de signaux sur les électrodes émettrices (1 à 32) obtenue en décalant les deux répartitions de signaux le long de la direction du déplacement.

3. Capteur selon la revendication 1, **caractérisé** en ce que l'une des deux répartitions de signaux est donnée par un générateur (64) de signaux ayant N ou 2 N sorties, et que l'autre répartition de signaux est dérivée de la première par des groupes de commutation (65a-65h) insérés entre chaque groupe d'électrodes et les sorties du générateur (64).

4. Capteur selon la revendication 1 ou 3, **caractérisé** en ce que des moyens électroniques (61-63) asservissent le déplacement de la configuration de signaux sur les électrodes émettrices (1-32) du curseur (40) au déplacement relatif entre le curseur (40) et des électrodes réceptrices (51, 52) de la règle (50).

5. Capteur selon la revendication 1 ou 3, **caractérisé** en ce que des moyens électroniques donnent une célérité de déplacement constante à la configuration de signaux sur les électrodes émettrices du curseur, le déplacement se mesurant par le déphasage du signal reçu.

## Claims

1. Capacitive sensor for measuring a movement, comprising two pieces movable with respect to each other, the first constituting a rule (50) incorporating a series of receptor electrodes (51, 52) having between them a spacing T in the direction of the movement, the second constituting a cursor (40) situated facing the rule and incorporating a series of transmitter electrodes (1 to 32) having between them a spacing T/N in the direction of the movement and electrically divided into M groups of N adjacent electrodes, characterised in that electronic means (60 to 65) make it possible to generate on each group one of two signal distributions, spatially periodic and mutually offset, a control circuit being provided to modify the signal configuration on the transmitter electrodes by switching the groups from one signal distribution to the other.

2. Sensor according to claim 1, characterised in that the modification of the signal configuration on the transmitter electrodes (1 to 32) obtained by offsetting the two signal distributions along the direction of the movement.

3. Sensor according to claim 1, characterised in that one of the two signal distributions is given by a signal generator (64) having N or 2 N outputs, and that the other signal distribution is derived from the first through switching sets (65a-65h) interposed between each group of electrodes and the outputs of the generator (64).

4. Sensor according to claim 1 or 3, characterised in that electronic means (61-63) make the movement of the signal configuration on the transmitter electrodes (1-32) of the cursor (40) dependent on the relative movement between the cursor (40) and the receptor electrodes (51, 52) on the rule (50).

5. Sensor according to claim 1 or 3, characterized in that electronic means give a constant velocity of movement to the signal configuration on the transmitter electrodes of the cursor, the movement being measured by the phase difference in the signal received.

**Patentansprüche**

1. Kapazitiver Weggeber für die Messung einer Verstellung, der zwei relativ zueinander bewegliche Teile aufweist, von denen das erste ein Lineal mit einer Reihe von Empfangselektroden (51,52) bildet, die zwischen sich in Richtung der Verstellung eine Teilung T haben, und von denen das zweite einen dem Lineal gegenüberliegenden Läufer (40) mit einer Reihe von Sendeelektroden (1 bis 32) bildet, die in Richtung der Verstellung zwischen sich eine Teilung T/N haben und elektrisch in M Gruppen von N Nachbarelektroden unterteilt sind, **dadurch gekennzeichnet,** daß es elektronische Mittel (60 bis 65) erlauben, auf jeder Gruppe die eine zweier räumlich periodisch und gegenseitig verschobener Signalverteilungen zu erzeugen, und daß ein Steuerkreis zum Ändern des Signalaufbaus der Sendeelektroden durch Vertauschung von Gruppen der Signalverteilungen gegeneinander vorgesehen ist.

2. Weggeber nach Anspruch 1, **dadurch gekennzeichnet,** daß die Änderung des Signalaufbaus der Sendeelektroden (1 bis 32) durch Verschieben der zwei Signalverteilungen in Richtung der Verstellung erhalten wird.

3. Weggeber nach Anspruch 1, **dadurch gekennzeichnet,** daß die eine der zwei Signalverteilungen von einem Signalgenerator (64) gegeben werden, der N oder 2 N Ausgänge hat, und daß die andere Signalverteilung von der ersten durch Kommutationsgruppen (65a bis 65h) abgeleitet wird, die zwischen jede Elektrodengruppe und die Ausgänge des Generators (64) geschaltet sind.

4. Weggeber nach Anspruch 1 oder 3, **dadurch gekennzeichnet,** daß elektronische Mittel (61 bis 63) die Verstellung des Signalaufbaus der Sendeelektroden (1 bis 32) des Läufers (40) zur Relativverstellung zwischen dem Läufer (40) und den Empfangselektroden (51,52) des Lineals (50) steuern.

5. Weggeber nach Anspruch 1 oder 3, **dadurch gekennzeichnet,** daß elektronische Mittel dem Signalaufbau der Sendeelektroden des Läufers eine konstante Verstellgeschwindigkeit geben, die sich nach der Phasenverschiebung des aufgenommenen Signals bemißt.

# FIG.1

MOD 64

60.

62.    63.

61.

Q6
Q5
Q4
Q3 Q2 Q1

G1
G2
G3
G4
G5
G6
G7
G8

65a.  65b.  65c.  65d.  65e.  65f.  65g.  65h.

42
1 2 3 4 5 6 7 8 9
30 31 32

41    43.

40

50.  52.

51.

D

T

2T

EP 0 271 436 B1

# FIG. 2

| Q6 | Q5 | Q4 | G1 | G2 | G3 | G4 | G5 | G6 | G7 | G8 |
|----|----|----|----|----|----|----|----|----|----|----|
| 0 | 0 | 0 | 0 | 0 | 0 | 0 | 1 | 1 | 1 | 1 |
| 0 | 0 | 1 | 1 | 0 | 0 | 0 | 0 | 1 | 1 | 1 |
| 0 | 1 | 0 | 1 | 1 | 0 | 0 | 0 | 0 | 1 | 1 |
| 0 | 1 | 1 | 1 | 1 | 1 | 0 | 0 | 0 | 0 | 1 |
| 1 | 0 | 0 | 1 | 1 | 1 | 1 | 0 | 0 | 0 | 0 |
| 1 | 0 | 1 | 0 | 1 | 1 | 1 | 1 | 0 | 0 | 0 |
| 1 | 1 | 0 | 0 | 0 | 1 | 1 | 1 | 1 | 0 | 0 |
| 1 | 1 | 1 | 0 | 0 | 0 | 1 | 1 | 1 | 1 | 0 |

EP 0 271 436 B1

# FIG.3

EP 0 271 436 B1

# FIG. 4

|   | Q6 | Q5 | Q4 | Q3 | Q2 | Q1 |
|---|----|----|----|----|----|----|
| a | 0  | 0  | 0  | 0  | 0  | 0  |
| b | 0  | 0  | 0  | 0  | 0  | 1  |
| c | 0  | 0  | 0  | 0  | 1  | 0  |
| d | 0  | 0  | 0  | 0  | 1  | 1  |
| e | 0  | 0  | 0  | 1  | 0  | 0  |
| f | 0  | 0  | 0  | 1  | 0  | 1  |
| g | 0  | 0  | 0  | 1  | 1  | 0  |
| h | 0  | 0  | 0  | 1  | 1  | 1  |
| i | 0  | 0  | 1  | 0  | 0  | 0  |
| j | 0  | 1  | 0  | 0  | 0  | 0  |

EP 0 271 436 B1